**Europäisches Patentamt**

**European Patent Office**

**Office européen des brevets**

(19)

(11) Veröffentlichungsnummer : **0 107 183**
**B1**

(12)

# EUROPÄISCHE PATENTSCHRIFT

(45) Veröffentlichungstag der Patentschrift :
20.01.88

(21) Anmeldenummer : 83110475.7

(22) Anmeldetag : 20.10.83

(51) Int. Cl.⁴ : **F 16 L 59/12**

---

(54) **Stützelement.**

---

(30) Priorität : **21.10.82 DE 8229482 U**

(43) Veröffentlichungstag der Anmeldung :
**02.05.84 Patentblatt 84/18**

(45) Bekanntmachung des Hinweises auf die Patenterteilung : **20.01.88 Patentblatt 88/03**

(84) Benannte Vertragsstaaten :
**BE DE NL**

(56) Entgegenhaltungen :
DE-A- 1 525 923
DE-A- 3 104 908
DE-C-   352 616
DE-U- 1 651 141
DE-U- 1 736 400
DE-U- 1 966 024
GB-A-   791 963
GB-A- 1 256 475
US-A- 2 707 493

(73) Patentinhaber : **Rheinhold & Mahla GmbH**
**Gneisenaustrasse 15**
**D-8000 München 50 (DE)**

(72) Erfinder : **Hillen, Albert**
**Peter-Maeth-Strasse 6**
**D-5480 Remagen 1 (DE)**
Erfinder : **Prediger, Norbert**
**Bremsen 10**
**D-5653 Leichlingen (DE)**

(74) Vertreter : **Seibert, Rudolf, Dipl.-Ing. et al**
**Anwaltsgemeinschaft Seibert, Winkelmeier & Partner**
**Tattenbachstrasse 9**
**D-8000 München 22 (DE)**

## Beschreibung

Die Erfindung betrifft ein Stützelement für äußere Schalen bei Rohrleitungen, bestehend aus auf dem Rohr sich abstützenden, einzelnen Isolierkörpern, die jeweils mittels einer Halterung an einem teilbaren Reifen aus flachem Metall befestigt sind.

Leitungen, die warme Medien führen, müssen zur Vermeidung von Wärmeverlusten und Schallabstrahlungen mit Isolierstoffen umgeben werden, die wiederum gegen Wetter und mechanische Beschädigungen durch Schalen außen geschützt sind.

Von der GB-A-791 963 ist ein Abstandshalter bekannt, bei dem der Blechmantel mittels eines innen anliegenden Metallringes fixiert ist, der wiederum über durch Halterung verbundene Keramikkerzen sich auf der Außenfläche des Medien führenden Rohres abstützt, wobei der so geschaffene Innenraum durch Wärmedämmstoffe ausgefüllt ist.

Der Nachteil dieser Konstruktion besteht darin, daß ein direkter Schalldurchgang wegen der durchgehenden festen Werkstoffe nicht vermieden werden kann. Auch wird jede Wärmeschwankung durch die direkte Verbindung von Mantelring und Halter bis tief in die Wärmedämmung hineingetragen. Schließlich lassen sich bei der Änderung der Außentemperatur Geräusche durch Schieben des Mantels auf den Ring infolge unterschiedlicher Wärmeausdehnung nicht vermeiden.

Aufgabe der Erfindung ist es, ein preiswertes Stützelement für Schalen bei isolierten Rohrleitungen zu finden, welches Wärmeabfluß reduziert, Schall schlecht leitet, Geräusche bei Längenänderung der Schale vermindert, einen einfachen konstruktiven Aufbau besitzt und leicht zu montieren ist.

Die Aufgabe wird erfindungsgemäß dadurch gelöst, daß radial nach außen Isolierelemente auf dem Reifen zur Unterstützung der Schale angebracht sind.

Durch das elastische Isolierelement wird eine Entkopplung von Rohr und Schale erzielt, so daß die Schallübertragung gering ist. Gleichzeitig liegen die wärmeleitenden Stahlteile im kälteren Bereich und geben, da sie gegenüber dem Rohr gut isoliert sind, nur noch geringe Wärmemengen ab. Diese Konstruktion ist aus nur wenigen Teilen aufgebaut und läßt sich einfach montieren.

In einer Ausführungsform bestehen die Isolierelemente aus hochtemperaturfestem Kunststoff, der versetzt zu den Isolierkörpern auf dem Reifen befestigt ist.

Durch ein profiliertes, außenliegendes Profil wird die Schall- und Wärmeübertragung verringert und das Gleiten beispielsweise bei Temperaturänderungen erleichtert. Das Profil kann durch T-förmige Ausnehmung direkt auf den Reifen geklemmt werden. Auch sind runde Zapfen mit umlaufender Nut denkbar, die in eine Bohrung des Reifens eingedrückt werden. Besonders geeignet für die Isolierelemente sind Silikonkautschuk, Fluorsilikone und Fluorelastomere, die Temperaturen bis zu 250 °C über Wochen aushalten und gute Schall-Dämpfungseigenschaften besitzen, so daß kaum noch Schwingungen vom Rohr auf die äußere Schale übertragen werden. Einsetzbar sind auch temperaturfest fluoride, thermoplastisch verarbeitete Werkstoffe von Polyvinylidenfluorid und deren Copolymere.

Ein Ausführungsbeispiel ist in den Zeichnungen dargestellt und wird im folgenden näher beschrieben. Es zeigen

Fig. 1 Schnitt durch isoliertes Rohr
Fig. 2 Schnitt durch Kerzenhalterung
Fig. 3 Schnitt durch Klemmprofil
Fig. 4 Schnitt durch Zapfenprofil

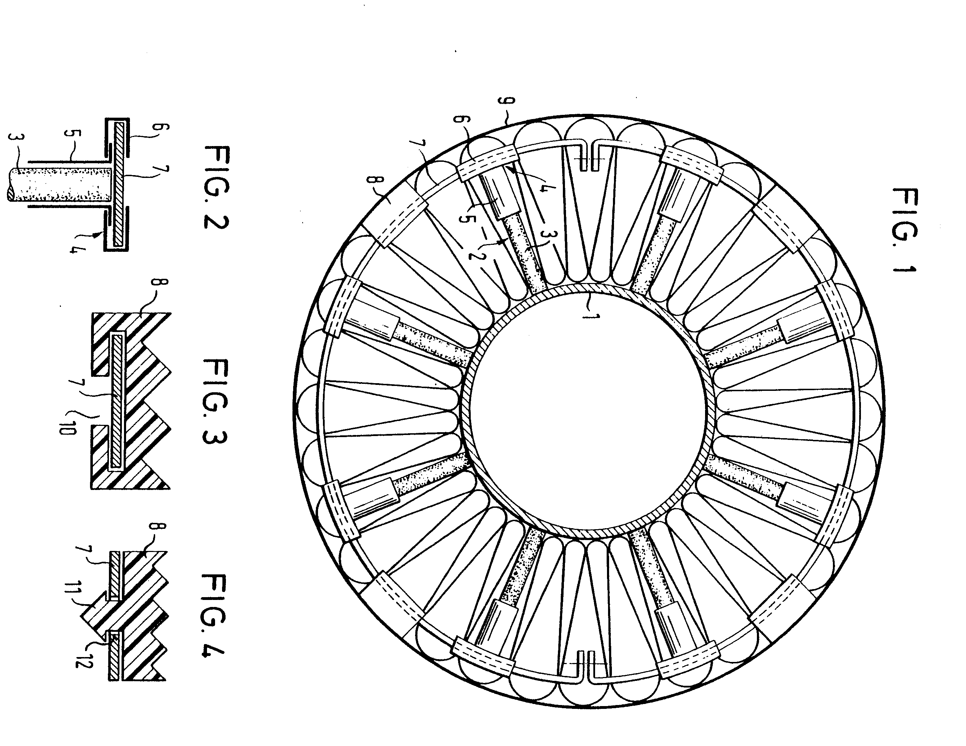

In der Fig. 1, 2 ist ein Schnitt durch ein Produkt führendes Rohr 1 gelegt, auf das sich ein Stützelement 2, bestehend aus Keramikkerzen 3, aufklemmbarer Halterung 4 (Metallfassung 5, umfalzbaren Belche 6), federndem Reifen 7 (Stahl) und Isolierelement 8 (Kunststoff) abstützt, welches wiederum die äußere Blechschale 9 trägt. Die Isolierelemente 8 sind wegen der Wärmeleitung auf Lücke zu den Keramikkerzen 3 gesetzt und können gemäß Fig. 3 durch eine T-förmige Ausnehmung 10 auf den Reifen 7 aufgeklemmt oder gemäß Fig. 4 durch genuteten Zapfen 11 in eine Bohrung 12 des Reifens 7 befestigt werden. Der freie Raum zwischen Rohr 1 und Blechschale 9 ist mit Mineralwolle ausgefüllt.

Durch die Keramikkerzen ist ein standfester Abstandshalter gegeben, der gleichzeitig eine geringe Wärmeleitfestigkeit besitzt. Die Halterung besteht aus einer Metallfassung, welche wiederum mittels umfalzbarem Metallblech auf dem Reifen befestigt ist. Diese flachen runden Reifen umgeben das Rohr in einem Abstand, der durch die Keramikkerzen bestimmt wird. Zur Montage werden die Enden der geteilten Reifen durch Bolzen oder Schnappverschlüsse miteinander verbunden, so daß die Montage sehr einfach ist.

## Patentansprüche

1. Stützelement für äußere Schalen bei Rohrleitungen, bestehend aus auf dem Rohr sich abstützenden, einzelnen Isolierkörpern, die jeweils mittels einer Halterung an einem flachen, teilbaren Reifen aus Metall befestigt sind, dadurch gekennzeichnet, daß radial nach außen Isolierelemente (8) auf dem Reifen zur Unterstützung der Schale (9) angebracht sind.

2. Stützelement nach Anspruch 1, dadurch gekennzeichnet, daß die Isolierelemente (8) versetzt zu den in Halterung fixierten Isolierkörpern (3) auf dem Reifen (7) befestigt sind.

3. Stützelement nach Ansprüchen 1 bis 2, dadurch gekennzeichnet, daß die Isolierelemente (8) außen ein Profil besitzen.

4. Stützelement nach Ansprüchen 1 bis 3, dadurch gekennzeichnet, daß die Isolierelemente (8) aus hochtemperaturfestem Kunststoff bestehen.

5. Stützelement nach Anspruch 4, dadurch gekennzeichnet, daß der hochtemperaturfeste Kunststoff aus Silikonkautschuk besteht.

6. Stützelement nach Anspruch 4, dadurch gekennzeichnet, daß der hochtemperaturfeste Kunststoff aus Fluorsilikonen besteht.

7. Stützelement nach Anspruch 4, dadurch gekennzeichnet, daß der hochtemperaturfeste Kunststoff aus Fluorelastomeren besteht.

## Claims

1. A supporting element for outer shells of pipes consisting of individual insulating bodies which support themselves on the pipe and which are each secured by means of a mount on a ring which can be divided, made of smooth metal, characterised in that insulation elements (8) are fitted on the ring radially to the exterior for the purpose of supporting the shell (9).

2. A supporting element according to claim 1, characterised in that the insulation elements (8), off-set from the insulation bodies (3) which are fitted in the mount, are secured on the ring (7).

3. A supporting element according to claims 1 and 2, characterised in that, the insulation elements (8) have a profile outside.

4. A supporting element according to claims 1 and 3 characterised in that the insulation elements (8) consist of a synthetic which is resistant to high temperatures.

5. A supporting element according to claim 4 characterised in that the synthetic which is resistant to high temperatures consists of silicon rubber.

6. A supporting element according to claim 4 characterised in that the synthetic which is resistant to high temperatures consists of silicon fluorides.

7. A supporting element according to claim 4, characterised in that the synthetic which is resistant to high temperatures consists of fluorine elastomers.

## Revendications

1. Elément d'appui pour enveloppes extérieures de canalisations tubulaires, composé de corps d'isolation séparés s'appuyant sur le tube, qui sont fixés suivant le cas, au moyen d'une attache, à un collier plat séparable en métal, caractérisé en ce que des éléments d'isolation (8), extérieurs radialement, sont disposés sur le collier de façon à supporter l'enveloppe (9).

2. Elément d'appui suivant la revendication 1, caractérisé en ce que les éléments d'isolation (8), décalés par rapport aux corps d'isolation (3) fixés dans une attache, sont fixés sur le collier (7).

3. Elément d'appui suivant les revendications 1 à 2, caractérisé en ce que les éléments d'isolation (8) présentent un profilage, extérieurement.

4. Elément d'appui suivant les revendications 1 à 3, caractérisé en ce que les éléments d'isolation (8) sont réalisés en matière plastique résistant à haute température.

5. Elément d'appui suivant la revendication 4, caractérisé en ce que la matière plastique résistant à haute température consiste en du caoutchouc silicone.

6. Elément d'appui suivant la revendication 4, caractérisé en ce que la matière plastique résistant à haute température consiste en des silicones fluorés.

7. Elément d'appui suivant la revendication 4, caractérisé en ce que la matière plastique résistant à haute température consiste en des élastomères fluorés.

FIG. 1

FIG. 2

FIG. 3

FIG. 4